# EUROPEAN PATENT APPLICATION

(11) **EP 1 761 095 A1**
(43) Date of publication of application: **07.03.2007**
(21) Application number: 05767208.1
(22) Date of filing: 26.07.2005
(51) Int. Cl.: H04Q 7/38

(54) **BASE STATION DEVICE AND WIRELESS COMMUNICATION METHOD**

(30) Priority: 30.07.2004 JP 2004224223
(71) Applicant: MATSUSHITA ELECTRIC INDUSTRIAL CO., LTD., Osaka 571-8501 (JP)
(72) Inventor: MATSUMOTO, Atsushi., Matsushita El. Ind.Co.Ltd, Osaka-shi, Osaka 540-6319 (JP); CHENG, Jun., Matsushita El. Ind.Co.Ltd, Osaka-shi, Osaka 540-6319 (JP); NISHIO, Akihiko., Matsushita El. Ind.Co.Ltd, Osaka-shi, Osaka 540-6319 (JP); MIYOSHI, Kenichi., Matsushita El. Ind.Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/013636
(87) International publication number: WO 2006/011471

(57) **Abstract**

A base station device enabling prevention of an increase of the power consumption of a terminal and reduction of interference caused in neighboring cells. The base station device (100) has a specific reception dynamic range. A reception level information acquiring section (154) acquires reception level information on received signals from users (#1 to #N) . On the basis of the reception level information, a selection section (156) selects a user acceptable in the reception dynamic range from the users (#1 to #N). A transmission permission notifying section (120) notifies the selected user of the permission of the uplink data transmission.

## Description

### Technical Field

The present invention relates to a base station apparatus and a radio communication method, and more particularly, to a base station apparatus and a radio communication method used in an environment under the influences of pass loss and fading variation.

### Background Art

Generally, signals transmitted and received between a base station apparatus (BS) and a mobile station apparatus (MS) in a radio communication system are influenced by pass loss and fading variation and the reception level on the receiving side may drastically vary.

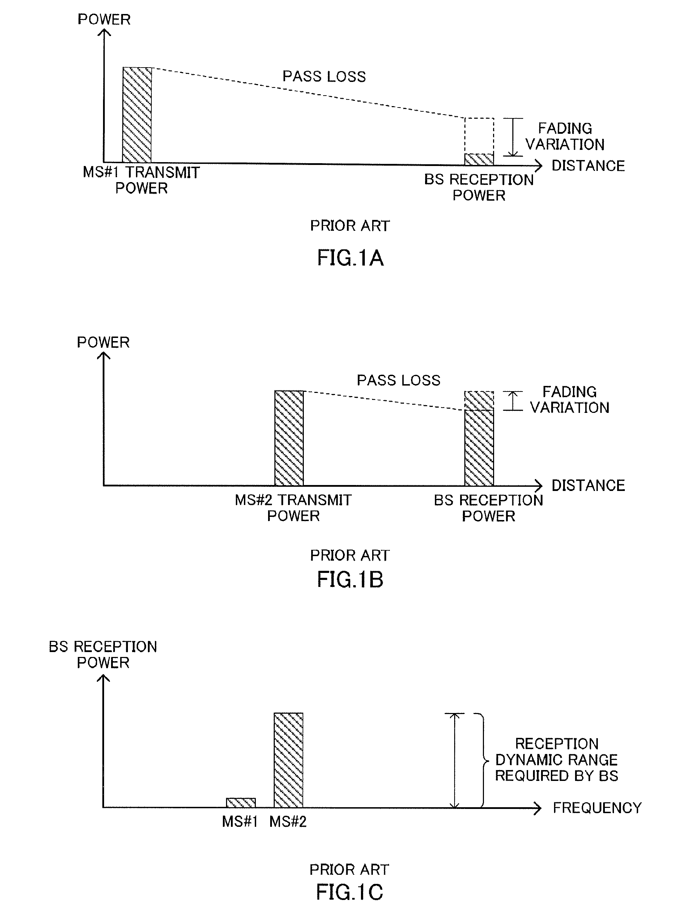

For example, as shown in FIG. 1A, when a signal is transmitted from MS#1 to a BS where the distance between the BS and MS#1 is relatively large, the amount of attenuation of the signal increases and the power level (reception level) of the signal which reaches the BS decreases. Furthermore, by undergoing the influence of fading variation, the reception level at the BS increases or decreases. On the other hand, as shown in FIG. 1B, when a signal is transmitted from MS#2 to BS where the distance between BS and MS#2 is relatively small, the amount of attenuation of the signal decreases and the reception level at the BS increases. Furthermore, the reception level at the BS increases or decreases under the influence of the fading variation. When a system is assumed where MS#1 and MS#2 located in such an environment are frequency division multiplexed, there is a big difference between the reception level of MS#1 and the reception level of MS#2, and the BS is required to have a very large reception dynamic range (FIG.1C). However, the expansion of the reception dynamic range has a limit.

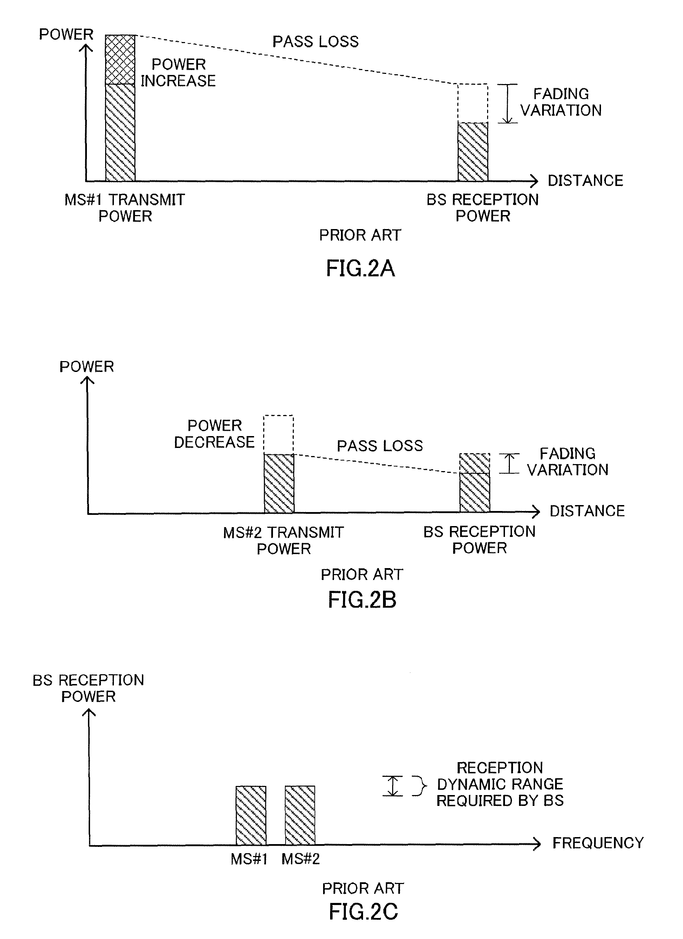

Therefore, in uplink data transmission from each MS to BS, an example of a conventional radio transmission method controls transmit power of each MS so that the reception level of the signal from each MS falls within a reception dynamic range unique to the BS. That is, in order that the reception level at the BS approaches a predetermined target value, when the transmit power of MS is insufficient, the transmit power is raised (FIG.2A), and when the transmit power of the MS is excessive, the transmit power is lowered (FIG.2B) . An example of such a transmit power control method is disclosed in Patent Document 1. In this way, the reception level of a signal from each MS ideally becomes constant. Furthermore, it is possible to reduce the reception dynamic range of BS compared to a case where no transmit power control is performed (FIG.2C).
Patent Document 1: Japanese Patent Application Laid-Open No. 2003-309475

### Disclosure of Invention

### Problems to be Solved by the Invention

However, according to the aforementioned conventional radio transmission method, for an MS, when the amount of attenuation of signal distance tends to increase, for example, when MS is located far from a BS, the frequency with which transmit power control is performed so as to increase transmit power needs to be increased, which results in an increase of power consumption of the MS. Moreover, an MS located far from a BS is likely to be in the vicinity of an adjacent cell. For this reason, increasing transmit power of such an MS may result in interference with the adjacent cell.

It is an obj ect of the present invention to provide a base station apparatus and a radio communication method capable of preventing increases in power consumption of a terminal apparatus and reducing interference with adjacent cells.

### Means for Solving the Problem

The base station apparatus of the present invention is a base station apparatus having a reception dynamic range unique thereto, including an acquisition section that acquires reception level information of a received signal from a terminal apparatus, a selection section that selects the terminal apparatus that can be accommodated in the above reception dynamic range in accordance with the acquired reception level information and a scheduling section that schedules data transmission for the selected terminal apparatus.

### Advantageous Effect of the Invention

According to the present invention, it is possible to prevent increases in power consumption of a terminal apparatus and reduce interference with adjacent cells. Further, it is also possible to reduce inter-carrier interference among users in an OFDM system, and system throughput can be improved.

### Brief Description of Drawings

FIG. 1A illustrates an example of pass loss between a BS and an MS and fading variation;
FIG. 1B illustrates another example of pass loss between a BS and an MS and fading variation;
FIG.1C illustrates a reception dynamic range required by a BS;
FIG.2A illustrates an example of pass loss between a BS and an MS and fading variation when general transmit power control is used;
FIG. 2B illustrates another example of pass loss between a BS and an MS and fading variation when general transmit power control is used;
FIG.2C illustrates a reception dynamic range required by a BS when general transmit power control is used;
FIG.3 is a block diagram showing a configuration of a base station apparatus according to Embodiment 1 of the present invention;
FIG.4A illustrates an example of a reception level information acquisition result according to Embodiment 1;
FIG. 4B illustrates an example of a user selection result according to Embodiment 1;
FIG.5A illustrates an example of a reception level information acquisition result of user #1 according to Embodiment 1;
FIG.5B illustrates an example of a reception level information acquisition result of user #2 according to Embodiment 1;
FIG.5C illustrates an example of a reception level information acquisition result of user #3 according to Embodiment 1;
FIG.5D illustrates another example of a user selection result according to Embodiment 1;
FIG.6 illustrates a configuration of a base station apparatus according to Embodiment 2 of the present invention;
FIG.7A illustrates grouping of reception targets according to Embodiment 2;
FIG.7B illustrates transmission timing given to one of reception target groups shown in FIG.7A;
FIG.7C illustrates transmission timing given to another reception target group shown in FIG.7A;
FIG.8A illustrates an example of a reception level information acquisition result according to Embodiment 2;
FIG.8B illustrates an example of a reception target user group according to Embodiment 2;
FIG. 8C illustrates a reception result of a reception target user group shown in FIG.8B;
FIG.8D illustrates another example of a reception target user group according to Embodiment 2;
FIG. 8E illustrates a reception result of a reception target user group shown in FIG.8D;
FIG. 8F illustrates another example of a reception target user group according to Embodiment 2; and
FIG.8G illustrates a reception result of a reception target user group shown in FIG.8F.

### Best Mode for Carrying Out the Invention

Now, embodiments of the present invention will be explained in detail with reference to the accompanying drawings.

(Embodiment 1)

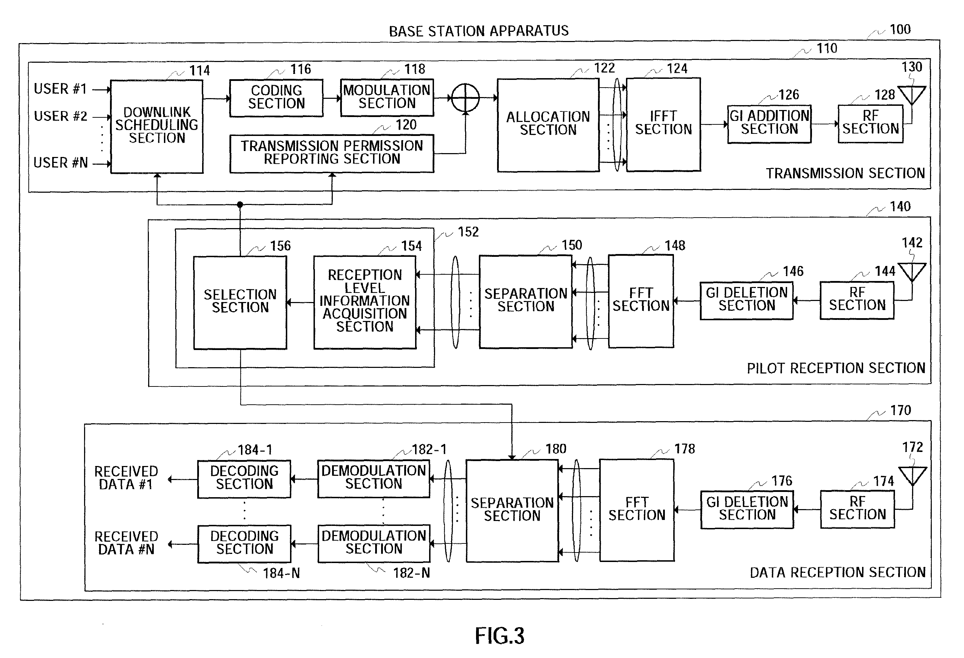

FIG.3 is a block diagram showing a configuration of a base station apparatus (BS) according to Embodiment 1 of the present invention. Base station apparatus 100 shown in FIG.3 has transmission section 110, pilot reception section 140 and data reception section 170, and is capable of connecting a maximum of N user terminal apparatuses (hereinafter, abbreviated as "users") #1 to #N. In this embodiment, base station apparatus 100 is connected to N users.

Transmission section 110 has downlink scheduling section 114, coding section 116, modulation section 118, transmission permission reporting section 120, allocation section 122, IFFT (Inverse Fast Fourier Transform) section 124, GI (Guard Interval) addition section 126, RF (Radio Frequency) section 128 and transmission antenna 130. Pilot reception section 140 has reception antenna 142, RF section 144, GI deletion section 146, FFT section 148, separation section 150 and decision section 152. Decision section 152 has reception level information acquisition section 154 and selection section 156. Data reception section 170 has reception antenna 172, RF section 174, GI deletion section 176, FFT section 178, separation section 180, N demodulation sections 182-1,..., 182-N and N decoding sections 184-1, ..., 184-N. Hereinafter, the details of the internal configurations of pilot reception section 140, transmission section 110 and data reception section 170 will be described in order.

In pilot reception section 140, RF section 144 applies predetermined radio reception processing including down-conversion and A/D conversion or the like to a signal from each user #1 to #N received by reception antenna 142. The received signal is a signal where signals from users #1 to #N are multiplexed. GI deletion section 146 deletes GI added at a predetermined position of the received signal subjected to radio reception processing. FFT section 148 applies FFT processing to the received signal where GI has been deleted. Separation section 150 separates the received signal subjected to FFT processing into received signals for each user.

In decision section 152, reception level in format ion acquisition section 154 measures or estimates the reception level when uplink data transmission from each user #1 to #N is performed using a pilot signal or the like included in the received signal from each user #1 to #N and thereby acquires reception level information of the received signal from each user #1 to #N. Selection section 156 compares the acquired reception level information with the dynamic range unique to base station apparatus 100 and as a result, selects a user who can be accommodated in the reception dynamic range from among users #1 to #N being connected. Selection section 156 then generates user information indicating this selection result and outputs it to downlink scheduling section 114, transmission permission reporting section 120 and separation section 180.

When each user #1 to #N transmits a pilot signal using arbitrary one or more subcarrier frequencies, selection section 156 sets a subcarrier frequency for allocation to the selected user (hereinafter, referred to as "selected user"), which is used for uplink data transmission. Selection section 156 then generates user information including the subcarrier frequency setting result in addition to the aforementioned selection result as well.

Decision section 152 of this embodiment decides a reception level using a pilot signal subjected to OFDM reception processing, but the level decision method is not limited to this. At decision section 152, if the reception level of each user #1 to #N at base station apparatus 100 canbe decided, other level decision methods may also be used. For example, it is possible to separate frequency division multiplexed users #1 to #N by a band path filter and measure RSSI (Received Signal Strength Indicator) from the separated signals.

At transmission section 110, downlink scheduling section 114 schedules downlink data transmission. More specifically, downlink scheduling section 114 performs scheduling in accordance with the user information from selection section 156 on the selected user indicated in the user information. As described above, by scheduling downlink data transmission among users selected in accordance with their reception levels, it is possible to reduce the dependency of each user on the transmit power control, prevent increases in power consumption of each user and reduce interference with adjacent cells. This is because it is necessary for each mobile station apparatus to transmit reception responses of downlink data or the like to the base station apparatus over the uplink.

Furthermore, downlink scheduling section 114 transmits user data directed to each user #1 to #N to coding section 116 according to the scheduling result. The scheduling method of downlink scheduling section 114 is based on, for example, a Max C/I (Maximum CIR) scheme, PF (Proportional Fairness) scheme or other appropriate schemes. It should be noted that the present invention does not depend on the downlink scheduling method by downlink scheduling section 114. The user data is subjected to error correcting coding processing by coding section 116 and then subjected to modulation processing (for example, QPSK and 16QAM are used) by modulation section 118.

Transmission permission reporting section 120 generates a message signal to report permission of uplink data transmission to the selected user indicated in the inputted user information. The generated message signal is multiplexed on the user data subjected to modulation processing. The user data multiplexed with the message signal is allocated to subcarriers by allocation section 122. Here, when each user #1 to #N is frequency division multiplexed, allocation section 122 allocates the user data to a subcarrier corresponding to each selected user. The user data allocated to the subcarrier is subjected to IFFT processing by IFFT section 124, and with GI added by GI addition section 126, subjected to predetermined transmission processing (D/A conversion and up-conversion or the like) by RF section 128 and transmitted to each selected user through transmission antenna 130.

In this embodiment, a message signal to report permission of uplink data transmission to the selected user is multiplexed with the user data and then transmitted. However, the method of transmitting a message signal does not depend on the user data transmission scheme. For example, a message signal may be transmitted independently without being multiplexed with the user data. In other words, the message signal may be transmitted over an individual channel or may be transmitted over a common channel or a broadcasting channel. The allocation method at allocation section 122 differs depending on the message signal transmission method to be used.

At data reception section 170, RF section 174 applies predetermined radio reception processing including down-conversion and A/D conversion or the like to the received signal from each user #1 to #N received at reception antenna 172. GI deletion section 176 deletes GI added at a predetermined position of the received signal subjected to radio reception processing. FFT section 178 applies FFT processing to the received signal where GI has been deleted. Separation section 180 separates received signals from the selected users included in the received signal subjected to FFT processing for each user in accordance with the inputted user information. The separated received signals are outputted to demodulation sections 182-1 to 182-N corresponding to each user. The received signals from users #1 to #N are subjected to demodulation processing (for example, QPSK and 16QAM are used) by demodulation sections 182-1 to 182-N and subjected to error correcting decoding and CRC decision by decoding sections 184-1 to 184-N. In this way, received data #1 to #N from respective selected users #1 to #N are obtained.

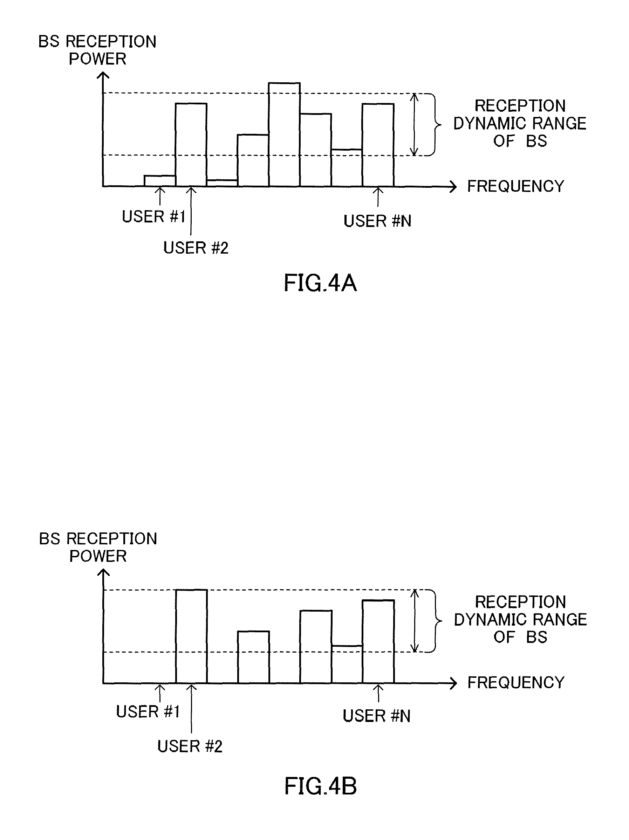

Next, an example of the operation of base station apparatus 100 having the aforementioned configuration will be described using FIGs.4A and 4B. Here, a case will be described as an example where users #1 to #N are frequency division multiplexed and where specific subcarrier frequencies are fixedly allocated to each user #1 to #N.

FIG.4A shows an example of a reception level information acquisition result at reception level information acquisition section 154 at certain reception timing. As illustrated, reception level information acquisition section 154 acquires the reception level information of users #1 to #N associated with the subcarrier frequencies allocated to each user #1 to #N. According to the reception level information acquisition result shown in FIG.4A, for example, the reception level of user #1 is outside the reception dynamic range of base station apparatus 100 and, for example, users #2 and #N are inside the reception dynamic range. That is, users #2 and #N can be accommodated in the reception dynamic range, whereas user #1 cannot be accommodated in the reception dynamic range. Therefore, as shown in FIG. 4B, selection section 156 takes users #2 and #N as selected users, whereas it does not take user #1 as a selected user. User information indicating such a selection result is generated. As a result, user #1 is excluded from the reception target of data to be transmitted over the uplink. In this way, it is possible to suppress the reception dynamic range of base station apparatus 100 to a small level without depending on transmit power control on each user #1 to #N. For each user #1 to #N, there is an advantage that it is possible to communicate with base station apparatus 100 without performing any transmit power control.

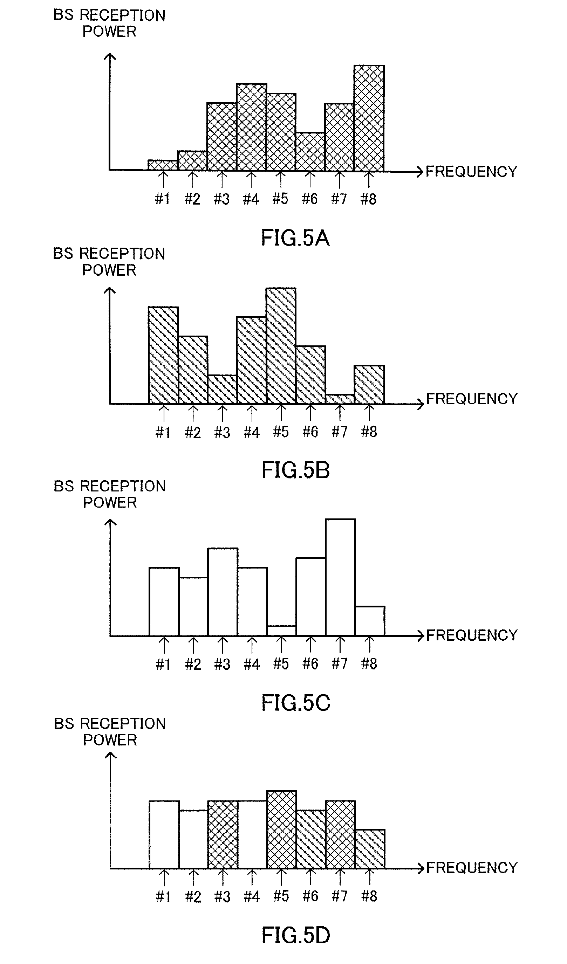

Next, other examples of the operation of base station apparatus 100 will be described using FIGs.5A to 5D. Here, a case will be taken as examples where users #1 to #N are frequency division multiplexed and where subcarrier frequencies are variably allocated to each user #1 to #N.

In this example, each user #1 to #N transmits a pilot signal using one or more arbitrary subcarrier frequencies. For example, as illustrated, users #1 to #3 transmit a pilot signal using subcarrier frequencies #1 to #8 in the whole usable band.

FIG.5A shows an example of a reception level information acquisition result of user #1 at reception level information acquisition section 154 at some reception timing. FIG. 5B shows an example of a reception level information acquisition result of user #2 at reception level information acquisition section 154 at some reception timing. FIG.5C shows an example of a reception level information acquisition result of user #3 at reception level information acquisition section 154 at some reception timing.

Selection section 156 which has received the reception level information takes users, out of users #1 to #3, with at least one used subcarrier frequency reception levels falling within the reception dynamic range as selected users. Further, selection section 156 sets the allocation to each selected user of the subcarrier frequency used for uplink data transmission. For example, as shown in FIG. 5D, selection section 156 determines to allocate subcarrier frequencies #3, #5 and #7 to user #1, allocate subcarrier frequencies #6 and #8 to user #2 and allocate subcarrier frequencies #1, #2 and #4 to user #3. Then, user information indicating these selection results and setting results is generated. In this way, it is possible to variably allocate subcarrier frequencies to each selected user.

In this way, according to this embodiment, users who can be accommodated in a reception dynamic range unique to base station apparatus 100 are selected and permission to transmit uplink data is reported to the selected users, and therefore it is possible to avoid uplink data transmission of, for example, a user who is located at such a distant position that the reception level is smaller than the minimum value of the reception dynamic range, reduce the dependency of each user on transmit power control, avoid increases in power consumption of each user and reduce interference with adjacent cells.

Base station apparatus 100 has the configuration based on an OFDM scheme, but a configuration is also possible based on an independent type multicarrier system different from the OFDM scheme.

(Embodiment 2)

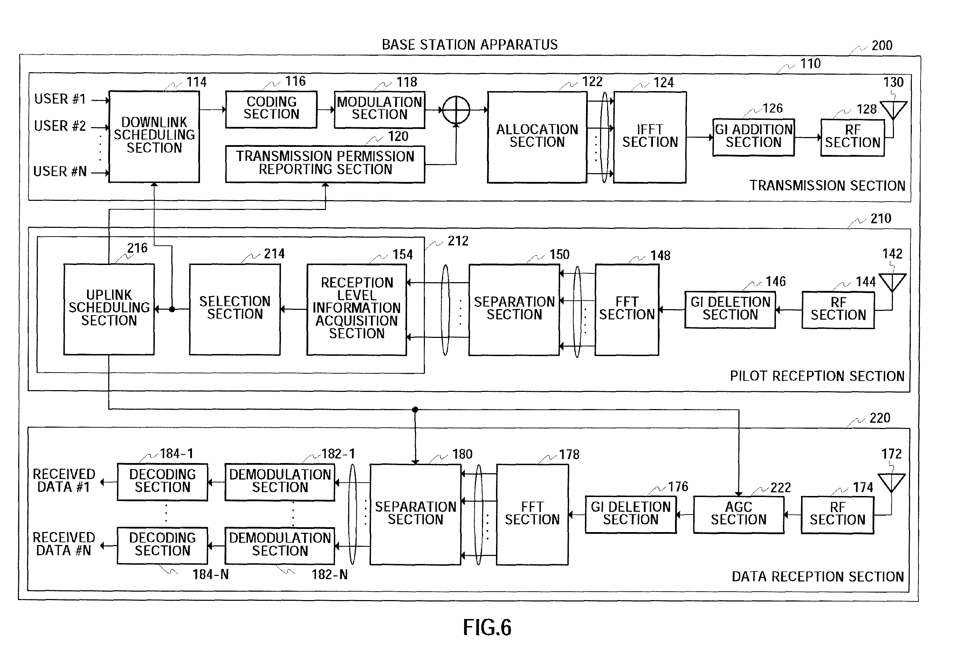

FIG.6 is a block diagram showing a configuration of a base station apparatus according to Embodiment 2 of the present invention. The base station apparatus described in this embodiment having the basic configuration similar to that of base station apparatus 100 described in Embodiment 1 are assigned the same reference numerals and detailed explanations thereof will be omitted.

Base station apparatus 200 shown in FIG.6 has the configuration provided with pilot reception section 210 and data reception section 220 instead of pilot reception section 140 and data reception section 170 described in Embodiment 1. Pilot reception section 210 has a configuration provided with decision section 212 instead of decision section 152 described in Embodiment 1. Decision section 212 is provided with selection section 214 instead of selection section 156 described in Embodiment 1 with uplink scheduling section 216 added. Furthermore, data reception section 220 has a configuration where AGC (Automatic Gain Control) section 222 is added to the configuration of data reception section 170.

Selection section 214 compares acquired reception level information with a dynamic range unique to base station apparatus 200, considers the amount of gain control, which will be described later, used at AGC section 222 and as a result, selects users who can be accommodated in the reception dynamic range from among users #1 to #N being connected. The selection result is reported to downlink scheduling section 114 and uplink scheduling section 216.

When each user #1 to #N transmits a pilot signal using one or more arbitrary subcarrier frequencies, selection section 214 sets subcarrier frequencies used for uplink data transmission allocated to the selected users. In addition to the aforementioned selection result, the subcarrier frequency setting result is also reported to uplink scheduling section 216.

Uplink scheduling section 216 schedules uplink data transmission of the selected users in accordance with the reported selection result and setting result. Furthermore, the selected users are allocated to groups and the timing of uplink data transmission is determined for each group (hereinafter, referred to as "reception target user group"). In other words, by grouping the selected users to be reception targets for each reception timing, scheduling of downlink data transmission is performed. In this way, it is possible to simplify and efficiently perform scheduling of uplink data transmission and for example, equalize the timings allocated to the selected users when timings of uplink data transmission are allocated to each reception target user group in order, and thereby improve the system throughput.

More specifically, uplink scheduling section 216 allocates the selected users in accordance with the reception levels of each selected user so that a maximum value of the difference in the reception level of the selected users allocated to the reception target user group falls to or below a predetermined value. In this way, it is possible to carry out uplink data transmission of two users having the mutual reception level difference greater than a predetermined value at different timings. An OFDM scheme is adopted in this embodiment, so that when the selected users are allocated in this way, it is possible to prevent quality degradation of subcarriers at a low reception level between subcarriers without depending on transmit power control of users #1 to #N and improve the system throughput.

Instead of the aforementioned allocation of the selected users in accordance with the reception levels, uplink scheduling section 216 may also allocate the selected users in accordance with MCS (Modulation and Coding Scheme) levels of each selected user so that a maximum value of the MCS level difference of the selected users allocated to the reception target user group falls to or below a predetermined value.

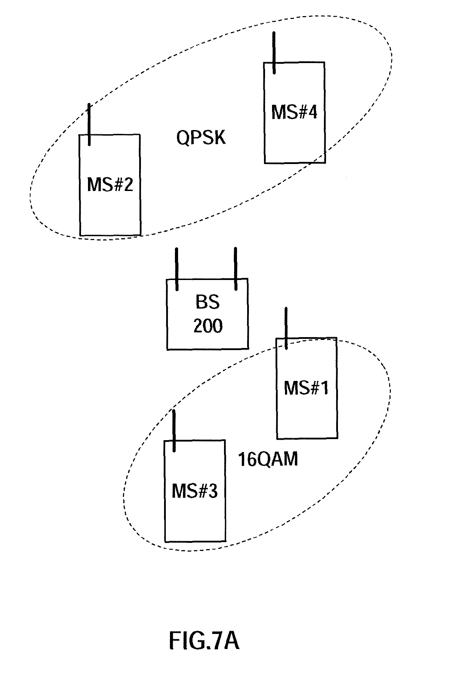

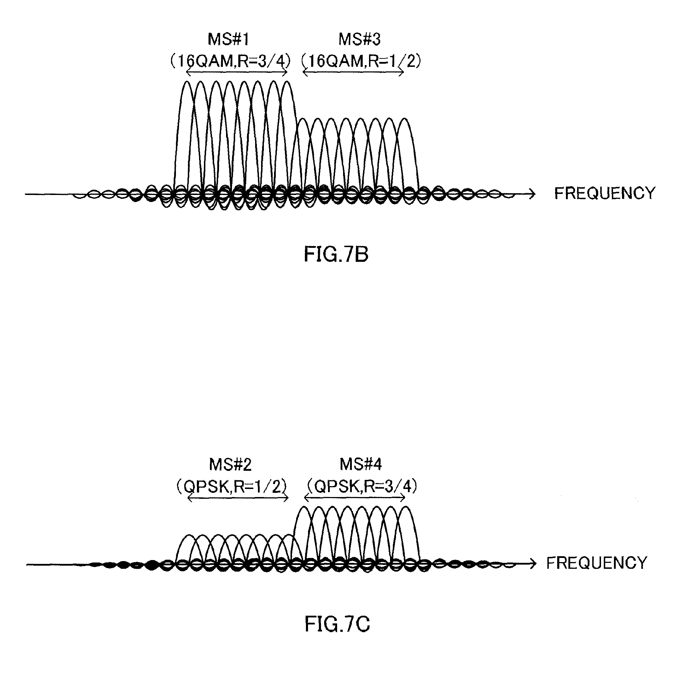

For example, as shown in FIG.7A, a case is assumed where base station apparatus (BS) 200 communicates with four MS#1 to #4, and MCS of MS#1 is (16QAM, R=3/4) , MCS of MS#2 is (QPSK, R=1/2), MCS of MS#3 is (16QAM, R=1/2) and MCS of MS#4 is (QPSK, R=3/4). In this case, MS#1 and MS#3 using 16 QAM modulation scheme are handled as one reception target group and MS#2 and #4 using QPSK modulation scheme are handled as another reception target group. As shown in FIG. 7B, the 16QAM group is given transmission timing common in the group. As shown in FIG. 7C, the QPSK group is also given transmission timing common in the group, but the QPSK group is given transmission timing different from the transmission timing given to the 16QAM group.

It is possible to prevent quality degradation of subcarriers at a low reception level due to interference between subcarriers without depending on the transmit power control of users #1 to #N and improve the system throughput in this case as well. FIGs. 7A to 7C show examples of a combination of MCSs and the number of subcarriers but they are not limited to these examples.

Here, the maximum value of the aforementioned predetermined value becomes the same value as the width of the reception dynamic range. Furthermore, when the aforementioned predetermined value is set to be small, it is possible to further equalize timings allocated to selected users, for example, by allocating timings to each group of reception target users in order.

Furthermore, uplink scheduling section 216 generates user information indicating the result of the aforementioned scheduling and outputs it to transmission permission reporting section 120, separation section 180 and AGC section 222.

AGC section 222 performs gain controls on a received signal subjected to radio reception processing by RF section 174 according to user information from uplink scheduling section 216. More specifically, the amount of gain control is set to be switchable in accordance with the user information so that the reception level of the received signal from a selected user at each reception timing falls within the reception dynamic range. In other words, the gain of the reception level is adjusted so that each selected user can be accommodated within the reception dynamic range. Therefore, by increasing the width of gain adjustment, the number of the selected users can be increased without depending on the transmit power control of each user #1 to #N, and it is possible to prevent the difference in the permission frequency of uplink data transmission between the users from expanding due to the positions of the users and frequency selective fading.

Further, by setting the amount of gain control to be switchable according to the scheduling result, it is possible to preset the amount of gain control to be used when uplink data transmission is carried out. Therefore, the gain control can be simplified compared to, for example, conventional AGC which requires the gain to converge to a target value at high speed after receiving a burst signal.

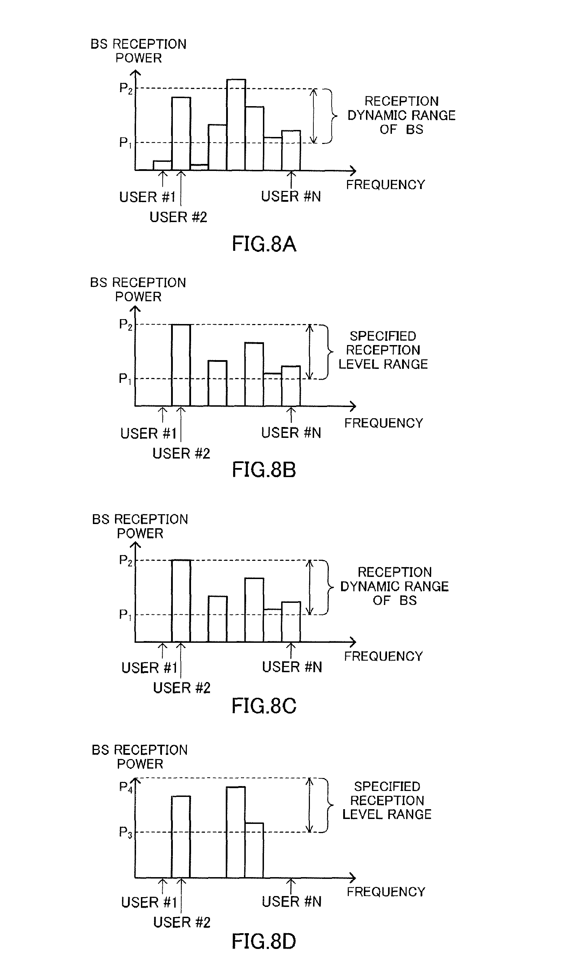

Next, the operation of base station apparatus 200 having the aforementioned configuration will be described using FIGs. 8A to 8G. Here, a case will be taken as an example where users #1 to #N are frequency division multiplexed and where specific subcarrier frequencies are fixedly allocated to each user #1 to #N.

FIG. 8A shows an example of a reception level information acquisition result at reception level information acquisition section 154 at some reception timing. As illustrated, reception level information acquisition section 154 acquires the reception level information of each user #1 to #N associated with the subcarrier frequencies allocated to each user #1 to #N. Therefore, uplink scheduling section 216 determines timing where each subcarrier frequency is used. Therefore, it is possible to schedule uplink data transmission in a system where users #1 to #N are frequency division multiplexed.

According to the reception level information acquisition result shown in FIG.8A, the reception levels of, for example, users #2 and #N fall within the reception dynamic range even if the gain is not adjusted by AGC, whereas the reception level of, for example, user #1 falls outside the reception dynamic range (P₁ to P₂) if the gain is not adjusted. However, in the case of this embodiment, the reception level of user #1 can be set to within the reception dynamic range if the gain is adjusted, and therefore selection section 214 also designates user #1 as a selected user at reception timing different from that of users #2 and #N.

Uplink scheduling section 216 allocates the selected users to different reception target groups by variably specifying the reception level range for the reception targets. The allocation of the selected users will be described below in detail.

First, uplink scheduling section 216 specifies the reception level range to P₁ to P₂ which is the same as the reception dynamic range as shown in FIG.8B. In this case, for example, the reception level of user #1 does not fall within specified reception level range P₁ to P₂, and therefore user #1 is excluded from the reception target user group here (a first group). In contrast to user #1, for example, users #2 and #N fall within reception level range P₁ to P₂, and therefore they belong to the first group. When uplink data transmission of the selected users belonging to the first group is carried out, AGC section 222 does not perform gain adjustment (amount of gain control = 0). The reception result of the selected users belonging to the first group is shown in FIG.8C.

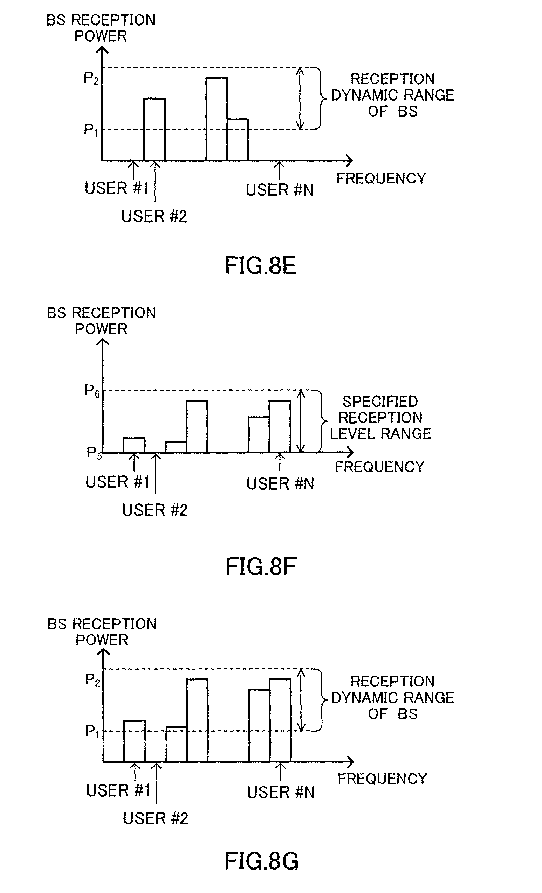

Furthermore, uplink scheduling section 216 also specifies a reception level range to P₃ to P₄ (P₃>P₁, P₄>P₂) as shown in FIG. 8D. In this case, the reception levels of users #1 and #N do not fall within specified reception level range P₃ to P₄, and therefore users #1 and #N are excluded from the reception target user group here (a second group). In contrast to users #1 and #N, for example, user #2 falls within reception level range P₃ to P₄, and therefore user #2 belongs to the second group. When uplink data transmission of selected users belonging to the second group is carried out, AGC section 222 performs gain adjustment in the direction where the reception level of the received signal is lowered. As a result, selected users having reception level within the reception level range (P₃ to P₄) can be accommodated in the reception dynamic range. The reception result of the selected users belonging to the second group is shown in FIG.8E.

Further, uplink scheduling section 216 also specifies the reception level range to P₅ to P₆ (p₅≒0<P₁, P₆<P₂) as shown in FIG.8F. In this case, the reception levels of, for example, users #1 and #N fall within specified reception level range P₅ to P₆, and therefore users #1 and #N belong to the reception target user group here (a third group). In contrast to users #1 and #N, for example, user #2 does not fall within reception level range P₅ to P₆, and therefore user #2 is excluded from the third group. When uplink data transmission of the selected users belonging to the third group is carried out, AGC section 222 performs gain adjustment in the direction where the reception level of the received signal is raised. As a result, the selected users having reception levels within the reception level range (P₅ to P₆) can be accommodated in the reception dynamic range. The reception result of the selected users belonging to the third group is shown in FIG.8G.

In this way, according to this embodiment, the reception level range is set to be variable and it is thereby possible to fairly receive signals from all the users and improve the throughput of the overall system.

Each function block employed in the description of each of the aforementioned embodiments may typically be implemented as an LSI constituted by an integrated circuit. These may be individual chips or partially or totally contained on a signal chip.

"LSI" is assumed here but this may also be referred to as "IC", "system LSI", "super LSI" or "ultra LSI" depending on differing extents of integration.

Furthermore, the method of circuit integration is not limited to LSI's, and implementation using a dedicated circuitry or general purpose processors is also possible. After LSI manufacture, utilization of FPGA (Field Programmable Gate Array) or a reconfigurable processor where connections and settings of circuit cells within an LSI can be reconfigured is also possible.

Furthermore, if integrated circuit technology comes out to replace LSI' s as a result of the advancement of semiconductor technologies or a derivative other technology, it is naturally also possible to carry our functional block integration using this technology. Application in biotechnology is also possible.

The present application is based on Japanese Patent Application No.2004-224223 filed on July 30, 2004, entire content of which is expressly incorporated by reference herein.

### Industrial Applicability

The present invention has effects of preventing increases in power consumption of a terminal apparatus and reducing interference with adjacent cells, and is suitable for use in a mobile communication system or the like under the influence of pass loss and fading variation.

## Claims

1. A base station apparatus having a unique reception dynamic range, comprising:
an acquisition section that acquires reception level information of received signals from terminal apparatuses;
a selection section that selects terminal apparatuses which can be accommodated in the unique reception dynamic range, in accordance with the acquired reception level information; and
a scheduling section that schedules data transmission for the selected terminal apparatuses.

2. The base station apparatus according to claim 1, wherein said scheduling section determines timing of uplink data transmission for the selected terminal apparatuses.

3. The base station apparatus according to claim 2, further comprising a gain control section that performs gain control on the received signals using an amount of gain control to cause the reception levels of the received signals from the selected terminal apparatuses to fall within the unique reception dynamic range,
wherein said selection section selects the terminal apparatuses in accordance with the amount of gain control.

4. The base station apparatus according to claim 3, wherein said gain control section performs gain control on the received signals using the amount of gain control which is switched according to the scheduling result.

5. The base station apparatus according to claim 2, wherein said scheduling section allocates the selected terminal apparatuses to groups and determines the timing of uplink data transmission per group.

6. The base station apparatus according to claim 5, wherein said scheduling section allocates the selected terminal apparatuses in accordance with the reception levels of the selected terminal apparatuses.

7. The base station apparatus according to claim 6, wherein said scheduling section allocates the selected terminal apparatuses so that a maximum value of differences between the reception levels of the groups falls to or below a predetermined value.

8. The base station apparatus according to claim 5, wherein said scheduling section allocates the selected terminal apparatuses in accordance with levels of coding and modulation schemes of the selected terminal apparatuses.

9. The base station apparatus according to claim 8, wherein said scheduling section allocates the selected terminal apparatuses so that a maximum value of the differences between the levels of the coding and modulation schemes of the groups falls to or below a predetermined value.

10. The base station apparatus according to claim 2, wherein:
the terminal apparatuses are assigned subcarrier frequencies to be used for uplink data transmission;
said acquisition section acquires the reception level information of the terminal apparatuses in association with the subcarrier frequencies; and
said scheduling section determines timing where the subcarrier frequencies are used.

11. The base station apparatus according to claim 2, wherein:
said acquisition section acquires the reception level information using pilot signals transmitted using subcarrier frequencies by the terminal apparatuses; and
said selection section sets an allocation of subcarrier frequencies to be used for uplink data transmission to the selected terminal apparatuses.

12. A radio communication method used by a base station apparatus having a unique reception dynamic range, comprising:
an acquiring step of acquiring reception level information of received signals from terminal apparatuses;
a selecting step of selecting terminal apparatuses which can be accommodated in the unique reception dynamic range in accordance with the acquired reception level information; and
a scheduling step of scheduling data transmission for the selected terminal apparatuses.
